# EUROPEAN PATENT APPLICATION

(11) **EP 3 480 504 A1**
(43) Date of publication of application: **08.05.2019**
(21) Application number: 17819820.6
(22) Date of filing: 08.06.2017
(51) Int. Cl.: F16L 15/00, F16L 15/04

(54) **SCREW JOINT FOR PIPE AND MANUFACTURING METHOD FOR SCREW JOINT FOR PIPE**

(30) Priority: 30.06.2016 JP 2016129518
(71) Applicant: Nippon Steel & Sumitomo Metal Corporation, Tokyo 100-8071 (JP); Vallourec Oil and Gas France, 59620 Aulnoye-Aymeries (FR)
(72) Inventor: GOTO, Kunio, Tokyo 100-8071 (JP)
(74) Representative: J A Kemp
(86) International application number: PCT/JP2017/021396
(87) International publication number: WO 2018/003455

(57) **Abstract**

There is provided a threaded connection for pipe the tightening torque of which is easy to adjust. A threaded connection for pipe according to the present embodiment includes a pin (3) and a box (4). The pin (3) and the box (4) have contact surfaces (34) and (44) that include thread parts (31) and (41), metal seal parts (32) and (42), and shoulder parts (33) and (43), respectively. The threaded connection for pipe includes a Zn-Ni alloy plating layer (100) on the contact surface (34) or (44) of one of the pin (3) and the box (4), and includes a Cu-Sn-Zn alloy plating layer (110) on the contact surface (34) or (44) of the other one. The threaded connection for pipe further includes a lubricating coating (200) in a liquid state or a semisolid state on at least one of the Zn-Ni alloy plating layer (100) and the Cu-Sn-Zn alloy plating layer (110).

## Description

### TECHNICAL FIELD

The present invention relates to a threaded connection for pipe and a method for producing a threaded connection for pipe, more specifically relates to a threaded connection for oil country tubular goods and a method for producing a threaded connection for oil country tubular goods.

### BACKGROUND ART

For drilling an oil field or a natural gas field, oil country tubular goods are used. The oil country tubular goods are formed by coupling a plurality of steel pipes in proportion to the depth of a well. The steel pipes are coupled by fastening threaded connections for pipe formed at end portions of the steel pipes. The oil country tubular goods are drawn up and loosened for inspection or the like, and after the inspection, fastened again and reused.

A threaded connection for pipe includes a pin and a box. The pin includes an external thread part and an unthreaded metal contact part that are formed on an outer peripheral surface of a front end portion of a steel pipe. The box includes an internal thread part and an unthreaded metal contact part that are formed on an inner peripheral surface of a front end portion of a steel pipe. Each of the unthreaded metal contact parts includes a metal seal part and a shoulder part. In fastening the steel pipes, the external thread part and the internal thread part are brought into contact with each other, the metal seal parts are brought into contact with each other, and the shoulder parts are brought into contact with each other.

The thread parts and the unthreaded metal contact parts of the pin and the box repeatedly are subjected to strong friction in fastening and loosening the steel pipes. If these regions do not have a sufficient durability against friction, galling (unrepairable seizure) occurs when the fastening and loosening are repeated. Therefore, threaded connections for pipe are required to have a sufficient durability against friction, namely, an excellent galling resistance.

In conventional practices, to enhance galling resistance, a compound grease, which contains heavy metals, has been used. By applying the compound grease on the surface of a threaded connection for pipe, the galling resistance of the threaded connection for pipe can be improved. However, heavy metals such as Pb, Zn, and Cu contained in the compound grease may have an influence on the environment. For this reason, there is a demand for developing a threaded connection for pipe for which no compound grease is used.

There are proposed threaded connections for pipe for which a grease containing no heavy metals (called green dope or yellow dope) is used in place of compound greases. For example, Japanese Patent Application Publication No. 2008-215473 (Patent Literature 1), National Publication of International Patent Application No. 2005-514573 (Patent Literature 2), and Japanese Patent Application Publication No. 2003-074763 (Patent Literature 3) describe threaded connections for pipe that are excellent in galling resistance even when a grease containing no heavy metals is used.

The threaded connection for steel pipes described in Japanese Patent Application Publication No. 2008-215473 (Patent Literature 1) is a threaded connection for steel pipes that includes a pin and a box each of which has a contact surface including a thread part and an unthreaded metal contact part. A feature of the threaded connection for steel pipes is that the contact surface of at least one of the pin and the box includes a first plating layer made of a Cu-Zn alloy. Patent Literature 1 describes that this feature allows sufficient leakage resistance and galling resistance to exert when a green dope is applied, or even when no dope is applied, and further allows an excellent corrosion resistance to exert, preventing the occurrence of crevice corrosion even when a green dope or a lubricating coating is present on a plating layer.

The tubular member described in National Publication of International Patent Application No. 2005-514573 (Patent Literature 2) includes an internal metal thread and/or an external metal thread in at least one of the ends thereof. At least part of a thread ridge of the internal thread or external thread is covered with an alloy that contains copper and tin. The alloy of copper and tin contains 20% by weight to 80% by weight of copper. Patent Literature 2 describes that this enables the provision of an improved metal-metal seal coupling part dispensing with the use of an environmentally hazardous grease. Furthermore, Patent Literature 2 describes the use of a PTFE-based lubricant or a graphite-based lubricant in coupling tubular members of this type.

The connection for oil country tubular goods described in Japanese Patent Application Publication No. 2003-074763 (Patent Literature 3) is a connection for oil country steel tubular goods that includes a pin part and a coupling, the pin part including an external thread and a metal-metal seal part in one end of a steel pipe that contains 9% by mass or more of Cr, the coupling being made of the same material and including, in both ends thereof, box portions each of which includes an internal thread and a metal-metal seal part. A feature of the connection for oil country tubular goods is that one Cu-Sn alloy layer is disposed on the surfaces of the internal thread and metal-metal seal part of the coupling. Patent Literature 3 describes that this feature makes the sealing ability of the connection better than those of conventional connections even when a green dope is used, and makes it possible to dramatically suppress galling in the connection.

In the techniques disclosed in Patent Literature 1 to Patent Literature 3 described above, a specified alloy plating layer is formed on a contact surface, whereby galling resistance is enhanced even when a green dope is used. Meanwhile, Japanese Patent Application Publication No. 2008-095019 (Patent Literature 4) and International Application Publication No. WO2009/057754 (Patent Literature 5) propose different techniques. Patent Literature 4 and Patent Literature 5 propose greases that substitute for a green dope.

The composite for forming a lubricating coating described in Japanese Patent Application Publication No. 2008-095019 (Patent Literature 4) contains one, or two or more basic oily materials selected from basic sulfonates, basic salicylates, basic phenates, and basic carboxylates. The composite shows a biodegradability (BOD) of 20% or more after 28 days in seawater. Patent Literature 4 describes that the composite shows a galling resistance and an antirust property on a par with those of the case of applying a compound grease, and by virtue of its high biodegradability, the composite can be used in a threaded connection for steel pipes to which no compound grease is applied, without being concerned about environmental pollution even in countries or regions that are strict about environmental regulation.

The composite described in International Application Publication No. WO2009/057754 (Patent Literature 5) is a composite for forming a lubricating coating on a threaded connection for pipe. The composite contains one or both of a rosin and a calcium fluoride, a metallic soap, a wax, and a basic metal salt of aromatic organic acid. Patent Literature 5 describes that this provides a lubricating coating that contains no hazardous heavy metal such as lead, which imposes a load on the global environment, and this allows the lubricating coating to provide a galling resistance, an gastightness, and an antirust property, and further to secure a high ΔT (torque-on-shoulder resistance).

In addition to the techniques disclosed in the above-mentioned Patent Literature 1 to Patent Literature 5, galling resistance can be improved even with a lubricating coating in a solid state. For example, the threaded connection for steel pipes described in Japanese Patent Application Publication No. 2002-327874 (Patent Literature 6) has a feature that two or more layers of lubricating coating in a solid state containing a lubricating powder are formed on at least one of a pin and a box. Patent Literature 6 describes that this enables the obtain of a threaded connection for steel pipes having excellent galling resistance and gastightness, which makes it unnecessary to apply compound grease containing haevy metal powder.

### CITATION LIST

### PATENT LITERATURE

Patent Literature 1: Japanese Patent Application Publication No. 2008-215473
Patent Literature 2: National Publication of International Patent Application No. 2005-514573
Patent Literature 3: Japanese Patent Application Publication No. 2003-074763
Patent Literature 4: Japanese Patent Application Publication No. 2008-095019
Patent Literature 5: International Application Publication No. WO2009/057754
Patent Literature 6: Japanese Patent Application Publication No. 2002-327874

### SUMMARY OF INVENTION

### TECHNICAL PROBLEM

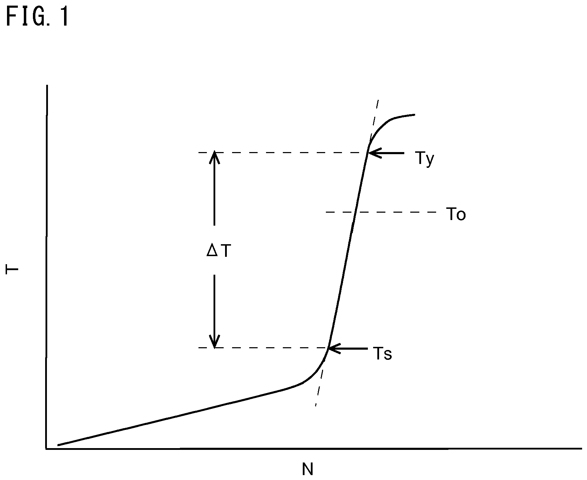

In fastening steel pipes, there is a predetermined optimal torque at which the fastening is to be terminated. FIG. 1 is a graph illustrating the relation between number of turns N of a steel pipe and torque T in fastening a threaded connection for pipe having shoulder parts. Referring to FIG. 1, when the threaded connection for pipe is being fastened, at first, the torque T increases in proportion to number of turns N. The rate of increase of the torque T at this point is low. When the fasten proceeds, the shoulder parts come into contact with each other. The torque T at this point is called a shouldering torque Ts. When the fasten further proceeds after the torque T reaches the shouldering torque Ts, the torque T increases in proportion to number of turns N again. The rate of increase of the torque T at this point is high. At the time when the torque T reaches a given numeric value (tightening torque To), the fastening is completed. When the shouldering torque Ts in the fastening satisfies 0.05To < Ts < 0.8To, metal seal parts interfere with each other at an appropriate interfacial pressure. In this case, the gastightness of the threaded connection for pipe is increased.

When the fastening is further carried on after the torque T reaches the tightening torque To, the torque T becomes excessively high. When the torque T becomes excessively high, parts of a pin and a box suffer plastic deformation. The torque T at this point is called a yield torque Ty. When a difference between the shouldering torque Ts and the yield torque Ty (hereinafter, will be referred to as a torque-on-shoulder resistance ΔT) is larger, a wider range of the tightening torque To is allowed. As a result, the tightening torque To is easier to adjust. Therefore, the higher the torque-on-shoulder resistance ΔT is, the more preferable it is.

Using the techniques described in aforementioned Patent Literature 1 to Patent Literature 6 enables the galling resistance of a threaded connection for pipe to be improved. However, although providing improved galling resistances, the threaded connections for pipe and the composites for forming lubricating coatings described in Patent Literature 1 to Patent Literature 6 provide low torque-on-shoulder resistances ΔT in some cases.

An objective of the present invention is to provide a threaded connection for pipe the tightening torque To of which is easy to adjust, and to provide a method for producing the threaded connection for pipe.

### SOLUTION TO PROBLEM

The threaded connection for pipe in the present embodiment includes a pin and a box, a Zn-Ni alloy plating layer, and a Cu-Sn-Zn alloy plating layer. The pin and the box each have a contact surface that includes a thread part, a metal seal part, and a shoulder part. The Zn-Ni alloy plating layer is disposed on a contact surface of one of the pin and the box. The Cu-Sn-Zn alloy plating layer is disposed on a contact surface of the other one of the pin and the box. The threaded connection for pipe further includes a lubricating coating in a liquid state or a semisolid state on at least one of the Zn-Ni alloy plating layer and the Cu-Sn-Zn alloy plating layer.

A method for producing a threaded connection for pipe according to the present embodiment is a method for producing a threaded connection for pipe including a pin and a box. The pin and the box each have a contact surface that includes a thread part, a metal seal part, and a shoulder part. The producing method includes a Zn-Ni alloy plating layer forming step, a Cu-Sn-Zn alloy plating layer forming step, and a coating forming step. In the Zn-Ni alloy plating layer forming step, a Zn-Ni alloy plating layer made of a Zn-Ni alloy is formed on a contact surface of one of the pin and the box. In the Cu-Sn-Zn alloy plating layer forming step, a Cu-Sn-Zn alloy plating layer made of a Cu-Sn-Zn alloy is formed on a contact surface of the other one of the pin and the box. In the coating forming step, a lubricating coating in a liquid state or a semisolid state is formed on at least one of the Zn-Ni alloy plating layer and the Cu-Sn-Zn alloy plating layer.

### ADVANTAGEOUS EFFECTS OF INVENTION

The threaded connection for pipe according to the present embodiment includes a Zn-Ni alloy plating layer on a contact surface of one of a pin and a box, and includes a Cu-Sn-Zn alloy plating layer on a contact surface of the other one. Therefore, the threaded connection for pipe provides a high torque-on-shoulder resistance ΔT, and the tightening torque To thereof is easy to adjust.

### BRIEF DESCRIPTION OF DRAWINGS

FIG. 1 is a graph illustrating the relation between the number of turns N and torque T in a threaded connection for pipe.
FIG. 2 is a diagram illustrating the configuration of a threaded connection for pipe according to the present embodiment.
FIG. 3 is a cross-sectional view of the threaded connection for pipe according to the present embodiment.
FIG. 4 is a cross-sectional view of an example of contact surfaces of the threaded connection for pipe (Pin) according to the present embodiment.
FIG. 5 is a cross-sectional view of an example of contact surfaces of the threaded connection for pipe (Box) according to the present embodiment.
FIG. 6 is a graph for illustrating a torque-on-shoulder resistance (ΔT') in examples.

### DESCRIPTION OF EMBODIMENTS

The present embodiment will be described below in detail with reference to the accompanying drawings. The same or equivalent elements will be denoted by the same reference numerals and the description thereof will not be repeated.

The present inventors conducted variety of studies about the relation between surface treatment on a contact surface of a threaded connection for pipe and torque-on-shoulder resistance ΔT. Consequently, the following findings were obtained.

To increase the torque-on-shoulder resistance ΔT, it is effective to decrease a shouldering torque Ts or to increase a yield torque Ty. A lubricating coating in a liquid state or a semisolid state changes its shape in accordance with a receiving pressure. Therefore, the lubricating coating in a liquid state or a semisolid state has a low frictional force in comparison with a lubricating coating in a solid state. A low frictional force makes both the shouldering torque Ts and the yield torque Ty decrease. When galling does not occur, yield torque Ty decreases remarkably. As a result, torque-on-shoulder resistance ΔT decreases.

Meanwhile, as the receiving pressure increases, the lubricating coating in a liquid state or a semisolid state decreases in thickness. In a final phase of the fastening, a high pressure is applied to the lubricating coating. Therefore, the lubricating coating is torn locally, and base metals come into direct contact with each other. The chemical compositions of the base metals are normally the same or close to each other. In this case, galling is likely to occur. When galling occurs locally, a load imposed on a threaded connection for pipe rapidly rises with a small number of turns N of the fastening. For this reason, the adjustment of the tightening torque To becomes difficult.

In the case of the lubricating coating in a solid state as in Patent Literature 6, since the deformation amount of the lubricating coating corresponding to the pressure is small, the above-mentioned problem hardly occurs. On the other hand, as described above, in the case of the lubricating coating in a liquid state or a semisolid state, the base metals are easily in direct contact with each other during the fastening.

The present inventors found that by disposing specified alloy plating layers on contact surfaces of a pin and a box, torque-on-shoulder resistance ΔT increases. Specifically, on a contact surface of one of the pin and the box, a Zn-Ni alloy plating layer made of a Zn-Ni alloy is disposed. On a contact surface of the other one of the pin and the box, a Cu-Sn-Zn alloy plating layer made of a Cu-Sn-Zn alloy is disposed. This disposition allows a yield torque Ty to be kept high.

The reason that the disposition of the aforementioned alloy plating layers allows the yield torque Ty to be kept high is conjectured as follows. Zn-Ni alloy plating and Cu-Sn-Zn alloy plating have appropriate coefficients of friction. Therefore, when the Zn-Ni alloy plating layer and the Cu-Sn-Zn alloy plating layer come into contact with each other, the frictional force therebetween increases, and the yield torque Ty increases. Furthermore, the Zn-Ni alloy plating and the Cu-Sn-Zn alloy plating have high hardnesses and fusing points. Therefore, even in a final phase of the fastening, the Zn-Ni alloy plating layer and the Cu-Sn-Zn alloy plating layer suffer minor damage, and a direct contact between base metals is inhibited. As a result, the yield torque Ty is kept high, which facilitates the adjustment of the tightening torque To.

The threaded connection for pipe in the present embodiment, which is completed based on the above findings, includes a pin and a box, a Zn-Ni alloy plating layer, and a Cu-Sn-Zn alloy plating layer. The pin and the box each have a contact surface that includes a thread part, a metal seal part, and a shoulder part. The Zn-Ni alloy plating layer is disposed on a contact surface of one of the pin and the box. The Cu-Sn-Zn alloy plating layer is disposed on a contact surface of the other one of the pin and the box. The threaded connection for pipe further includes a lubricating coating in a liquid state or a semisolid state on at least one of the Zn-Ni alloy plating layer and the Cu-Sn-Zn alloy plating layer.

The threaded connection for pipe according to the present embodiment includes the Zn-Ni alloy plating layer on the contact surface of one of a pin and a box, and includes the Cu-Sn-Zn alloy plating layer on the contact surface of the other one. Therefore, the threaded connection for pipe provides a high torque-on-shoulder resistance ΔT, and the tightening torque To thereof is easy to adjust.

It is preferable that the Zn-Ni alloy plating layer mentioned above has a thickness of 1 to 20 µm, the Cu-Sn-Zn alloy plating layer has a thickness of 1 to 20 µm, and the lubricating coating has a thickness of 30 to 300 µm.

In this case, the torque-on-shoulder resistance ΔT increases more stably.

Preferably, the Zn-Ni alloy mentioned above consists of 85 to 91 mass % of Zn and 9 to 15 mass % of Ni, with the balance being impurities.

Preferably, the Cu-Sn-Zn alloy mentioned above consists of 40 to 70 mass % of Cu, 20 to 50 mass % of Sn and 2 to 20 mass % of Zn, with the balance being impurities.

A method for producing the threaded connection for pipe according to the present embodiment is a method for producing a threaded connection for pipe including a pin and a box. The pin and the box each have a contact surface that includes a thread part, a metal seal part, and a shoulder part. The producing method includes a Zn-Ni alloy plating layer forming step, a Cu-Sn-Zn alloy plating layer forming step, and a coating forming step. In the Zn-Ni alloy plating layer forming step, a Zn-Ni alloy plating layer made of a Zn-Ni alloy is formed on a contact surface of one of the pin and the box. In the Cu-Sn-Zn alloy plating layer forming step, a Cu-Sn-Zn alloy plating layer made of a Cu-Sn-Zn alloy is formed on a contact surface of the other one of the pin and the box. In the coating forming step, a lubricating coating in a liquid state or a semisolid state is formed on at least one of the Zn-Ni alloy plating layer and the Cu-Sn-Zn alloy plating layer.

By the producing method according to the present embodiment, it is possible to produce a threaded connection for pipe that includes a Zn-Ni alloy plating layer on a contact surface of one of a pin and a box, and includes a Cu-Sn-Zn alloy plating layer on a contact surface of the other one. The threaded connection for pipe provides a high torque-on-shoulder resistance ΔT, and the tightening torque To thereof is easy to adjust.

Description will be made below about a threaded connection for pipe according to the present embodiment and a method for producing the threaded connection for pipe.

### [Threaded Connection for Pipe]

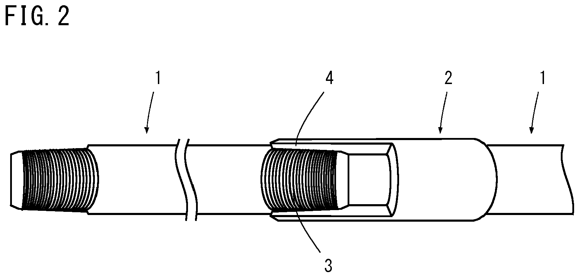

A threaded connection for pipe includes a pin and a box. FIG. 2 is a diagram illustrating the configuration of a threaded connection for pipe according to the present embodiment. Referring to FIG. 2, the threaded connection for pipe includes a steel pipe 1 and a coupling 2. At the both ends of the steel pipe 1, a pin 3 is formed that includes an external thread part on its outer surface. At the both ends of the coupling 2, a box 4 is formed that includes an internal thread part on its inner surface. By fastening the pin 3 and the box 4, the coupling 2 is attached to an end of the steel pipe 1. Besides, there is an integral-type threaded connection for oil country tubular goods, which does not include a coupling 2 but includes a pin 3 provided at one end of the steel pipe 1 and a box 4 provided at the other end. The threaded connection for pipe according to the present embodiment is available for both of coupling-type threaded connections for pipe and integral-type threaded connections for pipe.

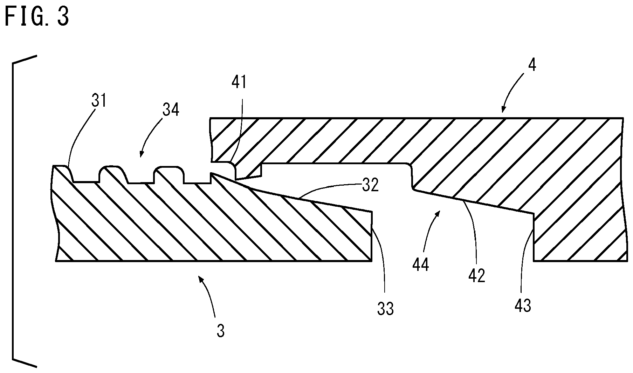

The pin 3 and the box 4 each have a contact surface that includes a thread part, a metal seal part, and a shoulder part. FIG. 3 is a cross-sectional view of the threaded connection for pipe according to the present embodiment. Referring to FIG. 3, the pin 3 includes an external thread part 31, a metal seal part 32, and a shoulder part 33. The box 4 includes an internal thread part 41, a metal seal part 42, and a shoulder part 43. The parts that come into contact with each other when the pin 3 and the box 4 are fastened are referred to as contact surfaces 34 and 44. Specifically, when the pin 3 and the box 4 are fastened, the thread parts (the external thread part 31 and the internal thread part 41) come into contact with each other, the metal seal parts (the metal seal parts 32 and 42) come into contact with each other, and the shoulder parts (the shoulder parts 33 and 43) come into contact with each other. In other words, the contact surfaces 34 and 44 include the thread parts 31 and 41, the metal seal parts 32 and 42, and the shoulder parts 33 and 43, respectively.

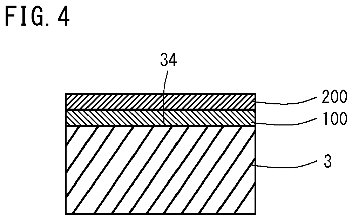

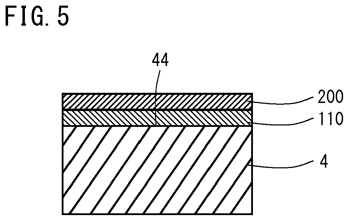

FIG. 4 and FIG. 5 is a cross-sectional view of an example of the contact surfaces 34 and 44 of the threaded connection for pipe according to the present embodiment. The alloy plating layers of the threaded connection for pipe according to the present embodiment differs on the contact surface of the pin 3 and on the contact surface of the box 4. In FIG. 4, the threaded connection for pipe includes a Zn-Ni alloy plating layer 100 on the contact surface 34 of the pin 3. In FIG. 5, the threaded connection for pipe includes a Cu-Sn-Zn alloy plating layer 110 on the contact surface 44 of the box 4. The threaded connection for pipe further includes lubricating coatings 200 on both of the Zn-Ni alloy plating layer 100 and the Cu-Sn-Zn alloy plating layer 110.

The disposition of the alloy plating layers according to the present embodiment is not limited to FIG. 4 and FIG. 5. The Cu-Sn-Zn alloy plating layer 110 may be disposed on the contact surface 34 of the pin 3, and the Zn-Ni alloy plating layer 100 may be disposed on the contact surface 44 of the box 4.

Normally, metal plating is applied to threaded connection for pipe for the purpose of improving galling resistance or corrosion resistance. In this case, the threaded connection for pipe has a plating layer only on either the contact surface of the pin 3 or the contact surface of the box 4. Even with plating layers on both contact surfaces of the pin 3 and the box 4, the threaded connection for pipe has the plating layers of the same chemical composition on the contact surfaces of the pin 3 and the box 4. However, the threaded connection for pipe according to the present embodiment includes alloy plating layers of different chemical compositions on the contact surface of the pin 3 and on the contact surface of the box 4. Furthermore, each of the alloy plating layer of the threaded connection for pipe according to the present embodiment has specific chemical composition.

### [Zn-Ni Alloy Plating Layer]

The Zn-Ni alloy plating layer 100 is disposed on a contact surface of one of the pin 3 and the box 4. The Zn-Ni alloy plating layer 100 is made of a Zn-Ni alloy. The Zn-Ni alloy consists of Zn and Ni, with the balance being impurities. Preferably, the Zn-Ni alloy consists of 85 to 91 mass % of Zn and 9 to 15 mass % of Ni, with the balance being impurities.

The chemical composition of the Zn-Ni alloy plating layer 100 is analyzed by the following method. Arbitrary 5 measurement points of the Zn-Ni alloy plating layer 100 are measured by using a handheld fluorescent X-ray analyzer (DELTA Premium DP-2000) manufactured by Olympus Innovex Co., Ltd. The measurement conditions are as follows. X-ray beam diameter: 3 mm, inspection time: 120 seconds, measurement mode: B1, analysis software: Alloy Plus. The arithmetic average of the measurement results of the 5 measurement points is taken as the chemical composition of the Zn - Ni alloy plating layer 100.

The thickness of the Zn-Ni alloy plating layer 100 is not particularly limited. The thickness of the Zn-Ni alloy plating layer 100 is, for example, 1 to 20 µm. When the thickness of the Zn-Ni alloy plating layer 100 is 1 µm or more, the torque-on-shoulder resistance ΔT can be increased stably. When the thickness of the Zn-Ni alloy plating layer 100 becomes more than 20 µm, the above effect is however saturated.

The thickness of the Zn-Ni alloy plating layer 100 is measured by the following method. One of the contact surfaces 34 and 44, on which the Zn-Ni alloy plating layer 100 is formed, is brought into contact with a probe of a film thickness gauge of a phase-sensitive eddy-current type that is compliant with International Organization for Standardization (ISO) 21968 (2005). Measurement is made on a phase difference between a high-frequency magnetic field on an input side of the probe and an eddy current on the Zn-Ni alloy plating layer 100 that is excited by the high-frequency magnetic field. The phase difference is converted into the thickness of the Zn-Ni alloy plating layer 100.

The threaded connection for pipe may include the Zn-Ni alloy plating layer 100 partially on one of the contact surface 34 or 44 of the pin 3 and the box 4. The threaded connection for pipe may include the Zn-Ni alloy plating layer 100 entirely on one of the contact surface 34 or 44 of the pin 3 and the box 4. The metal seal parts 32 and 42 are subjected to a high interfacial pressure in particular in a final phase of the fastening. Therefore, in the case of disposing the Zn-Ni alloy plating layer 100 partially on one of the contact surfaces 34 and 44, it is preferable to dispose the Zn-Ni alloy plating layer 100 on one of the metal seal parts 32 and 42. That is, the threaded connection for pipe may include the Zn-Ni alloy plating layer 100 only on the metal seal part 32 or 42 on the contact surface 34 or 44 of one of the pin 3 and the box 4. Meanwhile, when the Zn-Ni alloy plating layer 100 is disposed entirely on one of the contact surfaces 34 and 44, the production efficiency of the threaded connection for pipe is increased.

### [Cu-Sn-Zn Alloy Plating Layer]

The Cu-Sn-Zn alloy plating layer 110 is disposed on a contact surface of one of the pin 3 and the box 4 on which the Zn-Ni alloy plating layer 100 is not formed. The Cu-Sn-Zn alloy plating layer 110 is made of a Cu-Sn-Zn alloy. The Cu-Sn-Zn alloy consists of Cu, Sn, and Zn, with the balance being impurities. Preferably, the Cu-Sn-Zn alloy consists of 40 to 70 mass % of Cu, 20 to 50 mass % of Sn and 2 to 20 mass % of Zn, with the balance being impurities. The chemical composition of the Cu-Sn-Zn alloy plating layer 110 is analyzed by the same method as the Zn-Ni alloy plating layer 100 mentioned above.

The thickness of the Cu-Sn-Zn alloy plating layer 110 is not particularly limited. The thickness of the Cu-Sn-Zn alloy plating layer 110 is, for example, 1 to 20 µm. When the thickness of the Cu-Sn-Zn alloy plating layer 110 is 1 µm or more, the torque-on-shoulder resistance ΔT can be increased stably. When the thickness of the Cu-Sn-Zn alloy plating layer 110 becomes more than 20 µm, the above effect is however saturated. The thickness of the Cu-Sn-Zn alloy plating layer 110 is measured by the same method as that for the Zn-Ni alloy plating layer 100 mentioned above.

As with the Zn-Ni alloy plating layer 100, the Cu-Sn-Zn alloy plating layer 110 may be disposed partially or entirely on one of the contact surfaces 34 and 44. That is, the threaded connection for pipe may include the Cu-Sn-Zn alloy plating layer 110 partially on one of the contact surface 34 or 44 of the pin 3 and the box 4 on which the Zn-Ni alloy plating layer 100 is not formed. The threaded connection for pipe may include the Cu-Sn-Zn alloy plating layer 110 entirely on one of the contact surface 34 or 44 of the pin 3 and the box 4 on which the Zn-Ni alloy plating layer 100 is not formed. In the case of disposing the Cu-Sn-Zn alloy plating layer 110 partially on one of the contact surfaces 34 and 44, it is preferable to dispose the Cu-Sn-Zn alloy plating layer 110 on one of the metal seal parts 32 and 42. That is, the threaded connection for pipe may include the Cu-Sn-Zn alloy plating layer 110 only on one of the metal seal parts 32 or 42 on the contact surface 34 or 44 of the pin 3 and the box 4, on which the Zn-Ni alloy plating layer 100 is not formed. Meanwhile, when the Cu-Sn-Zn alloy plating layer 110 is disposed entirely on one of the contact surfaces 34 and 44, the production efficiency of the threaded connection for pipe is increased.

The Zn-Ni alloy plating layer 100 and the Cu-Sn-Zn alloy plating layer 110 have high hardnesses and fusing points. Therefore, even when fastening and loosening are repeated, damage to the Zn-Ni alloy plating layer 100 and the Cu-Sn-Zn alloy plating layer 110 is inhibited. Consequently, the yield torque Ty is kept high even when fastening and loosening are repeated.

Furthermore, zinc (Zn) contained in the Zn-Ni alloy plating layer 100 and the Cu-Sn-Zn alloy plating layer 110 is a base metal in comparison with iron (Fe), which is the principal component of the steel pipe. Therefore, the Zn-Ni alloy plating layer 100 and the Cu-Sn-Zn alloy plating layer 110 have the effect of sacrificial protection, increasing the corrosion resistance of the threaded connection for pipe.

### [Lubricating coating]

The threaded connection for pipe includes a lubricating coating 200 on at least one of the Zn-Ni alloy plating layer 100 and the Cu-Sn-Zn alloy plating layer 110. As shown in FIG. 4 and FIG. 5, the threaded connection for pipe may include the lubricating coating 200 in a liquid state or a semisolid state both on the Zn-Ni alloy plating layer 100 and on the Cu-Sn-Zn alloy plating layer 110. The threaded connection for pipe may include the lubricating coating 200 in a liquid state or a semisolid state only on the Zn-Ni alloy plating layer 100. The threaded connection for pipe may include the lubricating coating 200 in a liquid state or a semisolid state only on the Cu-Sn-Zn alloy plating layer 110.

The lubricating coating 200 is in a liquid state or a semisolid state. Here, the liquid state refers to a state of substance, which has a constant volume, but does not have a certain shape. When the lubricating coating 200 is in a liquid state, the lubricating coating 200 can change its shape freely and flow on the contact surface 34 and 44. The semisolid state refers to a state in which the lubricating coating 200 can flow on the contact surfaces 34 and 44 under an external load (pressure, heat, etc.) while changing its shape freely, as with the liquid state. Examples in the liquid state or the semisolid state include high-viscosity substances such as grease.

The lubricating coating 200 contains a well-known lubricant. Examples of the lubricant include SEAL-GUARD (TM) ECF (TM) from JET-LUBE Inc. Other examples of the lubricant include a lubricant that contains a rosin, a metallic soap, a wax, and a lubricant powder. The lubricant powder is, for example, an earthy graphite. The chemical compositions of the lubricating coating 200 disposed on the Zn-Ni alloy plating layer 100 and the lubricating coating 200 disposed on the Cu-Sn-Zn alloy plating layer 110 may be the same or different from each other.

The thickness of the lubricating coating 200 is not particularly limited. The thickness of the lubricating coating 200 is, for example, 30 to 300 µm. When the thickness of the lubricating coating 200 is 30 µm or more, the effect of decreasing the shouldering torque Ts is further increased. When the thickness of the lubricating coating 200 becomes more than 300 µm, the above effect is however saturated because a surplus of the lubricating coating 200 is removed from the contact surfaces 34 and 44 in the fastening.

The thickness of the lubricating coating 200 is measured by the following method. An arbitrary measurement point (area: 5 mm × 20 mm) of the metal seal portion 32 or 42 of the threaded connection for pipe is wiped off with absorbent cotton impregnated with ethanol. The amount of application of the lubricant is calculated from the difference between the weight of the absorbent cotton before wiping and the weight of the absorbent cotton after wiping. From the amount of application of the lubricant, the density of the lubricant, and the measurement point area, the average coating thickness of the lubricating coating 200 is calculated.

Unlike a lubricating coating in a solid state, the lubricating coating 200 in a liquid state or a semisolid state changes its shape under pressure. Therefore, the lubricating coating 200 generates a low frictional force. As a result, the shouldering torque Ts is decreased. Furthermore, unlike a lubricating coating in a solid state, the lubricating coating 200 in a liquid state or a semisolid state is not abraded even when fastening and loosening are repeated. In the fastening, the lubricating coating 200 in a liquid state or a semisolid state changes its shape and moves to a place where interfacial pressure is low. Then, in loosening, the lubricating coating 200 spreads out on the entire contact surface again. Therefore, the shouldering torque Ts of the threaded connection for pipe according to the present embodiment is kept low even when fastening and loosening are repeated.

Further, unlike a lubricating coating in a solid state, the lubricating coating 200 in a liquid state or a semisolid state partially breaks or moves to a place where interfacial pressure is low when the interfacial pressure is high (for example, in the fastening). Therefore, the Zn-Ni alloy plating layer 100 and the Cu-Sn-Zn alloy plating layer 110 are contact each other from the beginning of the fastening. As a result, friction is increased without causing galling, and the yield torque Ty increased.

### [Base metal of Threaded Connection for Pipe]

The chemical composition of a base metal of the threaded connection for pipe is not particularly limited. Examples of the base metal include carbon steels, stainless steels, and alloy steels. Of the alloy steels, high alloy steels such as Ni alloys and duplex stainless steels containing alloying elements such as Cr, Ni, and Mo have high anticorrosion properties. Therefore, when these high alloy steels are used as the base metal, the corrosion resistance of the threaded connection for pipe is increased.

### [Producing Method]

The method for producing a threaded connection for pipe according to the present embodiment is a method for producing the threaded connection for pipe mentioned before. The producing method includes a Zn-Ni alloy plating layer 100 forming step, a Cu-Sn-Zn alloy plating layer 110 forming step, and a coating forming step.

### [Zn-Ni Alloy Plating Layer Forming Step]

In the Zn-Ni alloy plating layer 100 forming step, the Zn-Ni alloy plating layer 100 made of a Zn-Ni alloy is formed on a contact surface of one of the pin 3 and the box 4. The Zn-Ni alloy plating layer 100 is formed by electrolytic plating. The electrolytic plating is performed in such a manner that the contact surface of one of the pin 3 and the box 4 is immersed in a plating bath containing zinc ions and nickel ions, and energized. The plating bath preferably contains zinc ion: 1 to 100 g/L and nickel ion: 1 to 50 g/L. The conditions for the electrolytic plating can be set as appropriate. The conditions for the electrolytic plating are, for example, a plating bath pH: 1 to 10, a plating bath temperature: 10 to 60°C, a current density: 1 to 100 A/dm², and a time period of the treatment: 0.1 to 30 minutes.

### [Cu-Sn-Zn Alloy Plating Layer Forming Step]

In the Cu-Sn-Zn alloy plating layer 110 forming step, the Cu-Sn-Zn alloy plating layer 110 made of a Cu-Sn-Zn alloy is formed on a contact surface of one of the pin 3 and the box 4 on which the Zn-Ni alloy plating layer 100 is not formed. The Cu-Sn-Zn alloy plating layer 110 is formed by electrolytic plating. The electrolytic plating is performed in such a manner that the contact surface of one of the pin 3 and the box 4 on which the Zn-Ni alloy plating layer 100 is not formed is immersed in a plating bath containing copper ion, tin ion, and zinc ion, and energized. The plating bath preferably contains copper ion: 1 to 50 g/L, tin ion: 1 to 50 g/L, and zinc ion: 1 to 50 g/L. The conditions for the electrolytic plating can be set as appropriate. The conditions for the electrolytic plating are, for example, a plating bath pH: 1 to 14, a plating bath temperature: 10 to 60°C, a current density: 1 to 100 A/dm², and a time period of the treatment: 0.1 to 40 minutes.

### [Coating Forming Step]

After the alloy plating layers mentioned above are formed on the contact surfaces of the pin 3 and the box 4, the coating forming step is performed. In the coating forming step, the lubricating coating 200 in a liquid state or a semisolid state is formed on at least one of the Zn-Ni alloy plating layer 100 and the Cu-Sn-Zn alloy plating layer 110.

The lubricating coating 200 is formed by applying the lubricant mentioned above on the alloy plating layers mentioned above. The method for the application is not particularly limited. Examples of the method for the application include spray application, brush application, and immersion. In the case of adopting the spray application, the lubricant may be sprayed while being heated and increased in fluidity. The lubricating coating 200 may be formed on part of the contact surfaces but is preferably formed on the entire contact surfaces uniformly. The coating forming step may be performed on one or both of the pin 3 or the box 4 including the Zn-Ni alloy plating layer 100, and the pin 3 or the box 4 including the Cu-Sn-Zn alloy plating layer 110.

### [Preconditioning Treatment Step]

The producing method may include a preconditioning treatment step before the Zn-Ni alloy plating layer 100 forming step and the Cu-Sn-Zn alloy plating layer 110 forming step, as necessary. Examples of the preconditioning treatment step include pickling and alkaline degreasing. In the preconditioning treatment step, oil content and the like adhered to the contact surface is removed. The preconditioning treatment step may further include grinding work such as sandblast and mechanical grinding finishing. Only one of these preconditioning treatments may be performed, or more than one of these preconditioning treatments may be performed in combination.

### EXAMPLES

Hereinafter, examples will be described. In the examples, the contact surface of a pin will be referred to as a pin surface, and the contact surface of a box will be referred to as a box surface. In addition, the symbol"%" in the examples means mass percent.

A steel pipe used in the present examples was VAM21HT (R) from Nippon Steel & Sumitomo Metal Corporation. The steel pipe had an outer diameter: 127.00 mm (5 inches) and a wall thickness: 9.19 mm (0.362 inches). The type of the steel pipe was 13Cr steel. The chemical composition of the steel pipe was C: 0.19%, Si: 0.25%, Mn: 0.8%, P: 0.02%, S: 0.01%, Cu: 0.04%, Ni: 0.1%, Cr: 13%, Mo: 0.04%, and the balance: Fe and impurities.

A pin surface and a box surface of each test number were subjected to the mechanical grinding finishing (at a surface roughness Ra: 3 µm). Subsequently, the preconditioning treatment shown in Table 1 was performed, the plating layers and the lubricating coating shown in Table 1 were formed, whereby the pin and the box of each test number were prepared.

### [Table 1]

**TABLE1**

| TEST NUMBER | | PRECONDITIONING TREATMENT | PLATING LAYER (THICKNESS) | LUBRICATING COATING (THICKNESS) |
|---|---|---|---|---|
| 1 | PIN SURFACE | - | Zn-Ni ALLOY PLATING LAYER (4.9 µm) | LUBRICATING COATING J (120 µm) |
| | BOX SURFACE | - | Cu-Sn-Zn ALLOY PLATING LAYER (8.0 µm) | LUBRICATING COATING J (120 µm) |
| 2 | PIN SURFACE | - | Zn-Ni ALLOY PLATING LAYER (4.9 µm) | LUBRICATING COATING S (80 µm) |
| | BOX SURFACE | - | Cu-Sn-Zn ALLOY PLATING LAYER (8.0 µm) | LUBRICATING COATING S (80 µm) |
| 3 | PIN SURFACE | - | Cu-Sn-Zn ALLOY PLATING LAYER (8.0 µm) | LUBRICATING COATING S (80 µm) |
| | BOX SURFACE | - | Zn-Ni ALLOY PLATING LAYER (5.0 µm) | LUBRICATING COATING S (80 µm) |
| 4 | PIN SURFACE | SANDBLAST | - | LUBRICATING COATING D (120 µm) |
| | BOX SURFACE | - | Cu PLATING LAYER (7.0 µm) | LUBRICATING COATING D (120 µm) |
| 5 | PIN SURFACE | SANDBLAST | - | LUBRICATING COATING J (120 µm) |
| | BOX SURFACE | - | Cu PLATING LAYER (7.0 µm) | LUBRICATING COATING J (120 µm) |
| 6 | PIN SURFACE | SANDBLAST | - | LUBRICATING COATING J (120 µm) |
| | BOX SURFACE | - | Cu-Sn-Zn ALLOY PLATING LAYER (8.0 µm) | LUBRICATING COATING J (120 µm) |
| 7 | PIN SURFACE | SANDBLAST | - | LUBRICATING COATING S (80 µm) |
| | BOX SURFACE | - | Zn-Ni ALLOY PLATING LAYER (5.0 µm) | LUBRICATING COATING S (80 µm) |
| 8 | PIN SURFACE | - | Zn-Ni ALLOY PLATING LAYER (4.9 µm) | LUBRICATING COATING S (80 µm) |
| | BOX SURFACE | - | Zn-Ni ALLOY PLATING LAYER (5.0 µm) | LUBRICATING COATING S (80 µm) |

### [Preconditioning Treatment Step]

The pin surface of test number 4 to test number 7 was subjected to sandblast as the preconditioning treatment. The surface roughness of each pin after the sandblast was an arithmetic average roughness Ra of 1.0 µm and a maximum height roughness Rz of 5.2 µm, the arithmetic average roughness Ra and the maximum height roughness Rz being specified in JIS B0601:2013.

### [Plating Layer Forming Step]

On the pin surface and the box surface of each test number, the plating layers were formed. The formation of the plating layers was performed by electrolytic plating. The detailed producing conditions for the plating layers of each test number were those shown in Table 2. In the case of forming the Zn-Ni alloy plating layer as the plating layer (for the pin surfaces of test number 1, test number 2, and test number 8, and the box surfaces of test number 3, test number 7, and test number 8), use was made of trade name: DAIN Zinalloy N-PL from Daiwa Fine Chemicals Co., Ltd. as the plating bath, and an electrolytic bath was initially made-up. In the case of forming the Cu-Sn-Zn alloy plating layer as plating layer (for the pin surface of test number 3, and the box surfaces of test number 1, test number 2, and test number 6), use was made of a plating bath from NIHON KAGAKU SANGYO CO., LTD. as the plating bath. In the case of forming the Cu plating layer as the plating layer (for the box surfaces of test number 4 and test number 5), use was made of a copper cyanide bath containing copper ion: 20 to 50 g/L and free cyanide: 7 to 20 g/L as the plating bath.

### [Table 2]

**TABLE2**

| TEST NUMBER | | PLATING LAYER | PLATING BATH pH | PLATING BATH TEMPERATURE (°C) | CURRENT DENSITY (A/dm²) | TREATMENT TIME (min) | PLATING LAYER COMPOSITION |
|---|---|---|---|---|---|---|---|
| 1 | PIN SURFACE | Zn-Ni ALLOY PLATING LAYER | 6.5 | 25 | 2 | 18 | Zn:85.3%, Ni:14.7% |
| | BOX SURFACE | Cu-Sn-Zn ALLOY PLATING LAYER | 14 | 45 | 2 | 40 | Cu: about 63%, Sn: about 30%, Zn: about 7% |
| 2 | PIN SURFACE | Zn-Ni ALLOY PLATING LAYER | 6.5 | 25 | 2 | 18 | Zn:89.5%, Ni:10.5% |
| | BOX SURFACE | Cu-Sn-Zn ALLOY PLATING LAYER | 14 | 45 | 2 | 40 | Cu: about 63%, Sn: about 30%, Zn: about 7% |
| 3 | PIN SURFACE | Cu-Sn-Zn ALLOY PLATING LAYER | 14 | 45 | 2 | 40 | Cu: about 63%, Sn: about 30%, Zn: about 7% |
| | BOX SURFACE | Zn-Ni ALLOY PLATING LAYER | 6.5 | 25 | 2 | 18 | Zn:85.3%, Ni:14.7% |
| 4 | PIN SURFACE | - | - | - | - | - | - |
| | BOX SURFACE | Cu PLATING LAYER | 14 | 60 | 3 | 20 | Cu:100% |
| 5 | PIN SURFACE | - | - | - | - | - | - |
| | BOX SURFACE | Cu PLATING LAYER | 14 | 60 | 3 | 20 | Cu:100% |
| 6 | PIN SURFACE | - | - | - | - | - | - |
| | BOX SURFACE | Cu-Sn-Zn ALLOY PLATING LAYER | 14 | 45 | 2 | 40 | Cu: about 63%, Sn: about 30%, Zn: about 7% |
| 7 | PIN SURFACE | - | - | - | - | - | - |
| | BOX SURFACE | Zn-Ni ALLOY PLATING LAYER | 6.5 | 25 | 2 | 18 | Zn:85.3%, Ni:14.7% |
| 8 | PIN SURFACE | Zn-Ni ALLOY PLATING LAYER | 6.5 | 25 | 2 | 18 | Zn:85.3%, Ni:14.7% |
| | BOX SURFACE | Zn-Ni ALLOY PLATING LAYER | 6.5 | 25 | 2 | 18 | Zn:90.3%, Ni:9.7% |

### [Coating Forming Step]

To the pin surface and the box surface of each test number, lubricant was applied at a normal temperature, whereby the lubricating coating was formed. For a lubricating coating J and a lubricating coating D, lubricant was applied by brush application. For a lubricating coating S, lubricant was diluted with mineral spirit, and spray application was performed, whereby the lubricating coating S was formed. For the formation of the lubricating coatings, the following lubricants were used.

| | |
|---|---|
| - Lubricating coating J | Trade name: SEAL-GUARD (TM) ECF (TM) from JET-LUBE Corporation |
| - Lubricating coating S | Rosin: 10% |
| | Ca stearate: 15% |
| | Wax: 10% |
| | Earthy graphite: 5% |
| | Basic Ca sulfonate: the balance |
| - Lubricating coating D | Compound grease specified in American Petroleum Institute (API) Bulletin 5A2 |

The lubricating coating J was what is called a yellow dope, which is classified as "Yellow" according to the guideline of Harmonised Offshore Chemical Notification Format (HOCNF). The lubricating coating S was a grease-like lubricating coating containing no heavy metals. For the formation of the lubricating coating S, the aforementioned lubricant was diluted with mineral spirit and used. The lubricating coating D was a compound grease containing heavy metals such as lead (Pb). Coating conditions were obtained in advance so that the thickness of each lubricating coating had the thickness shown in Table 1, and a lubricating coating was formed under the coating conditions.

### [Torque-On-Shoulder Resistance Measurement Test]

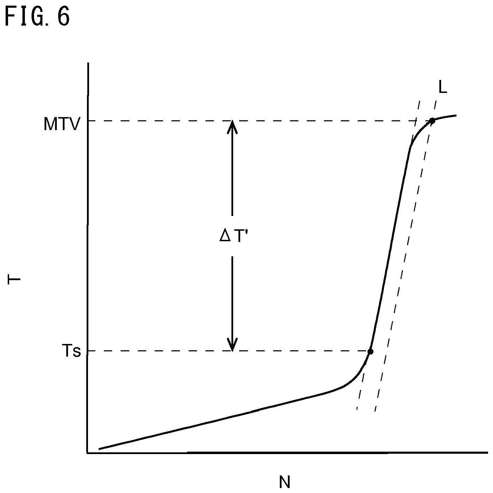

Using the pin and the box of each test number, torque-on-shoulder resistance was measured. Specifically, the fastening was performed at a tightening speed of 10 rpm and with a tightening torque of 42.8 kN·m. In the fastening, torque was measured, and a torque chart was created as shown in FIG. 6. N in FIG. 6 denotes number of turns. T in FIG. 6 denotes torque. Ts in FIG. 6 denotes shouldering torque. MTV in FIG. 6 denotes a torque value where a line segment L intersects with the torque chart. The line segment L is a straight line that has the same inclination as that of a linear region in the torque chart after shouldering and that is larger in number of turns than the linear region by 0.2%. Normally, to measure torque-on-shoulder resistance, yield torque (Ty) is used. However, in the present example, the yield torque (a boundary between the linear region and a nonlinear region in the torque chart after shouldering) was unclear. Thus, using the line segment L, MTV was defined. The difference between MTV and Ts was determined as a torque-on-shoulder resistance (ΔT'). The torque-on-shoulder resistance (ΔT') was determined in the form of relative value using test number 4 as a reference (100%). The results of the measurement are shown in Table 3. Test number 4 is a typical combination of surface treatments for a threaded connection for pipe in the case of using a compound grease.

**[Table 3]**

| TEST NUMBER | ΔT' |
|---|---|
| | (%) |
| 1 | 128 |
| 2 | 140 |
| 3 | 135 |
| 4 | 100 (REFERENCE) |
| 5 | 74 |
| 6 | 91 |
| 7 | 88 |
| 8 | 90 |

### [Result Of Evaluation]

Referring Table 1 and Table 3, the threaded connections for pipe of test number 1 to test number 3 each included the Zn-Ni alloy plating layer on a contact surface of one of the pin and the box, and included a Cu-Sn-Zn alloy plating layer on a contact surface of the other one. The threaded connections for pipe of test number 1 to test number 3 each included the lubricating coating on at least one of the Zn-Ni alloy plating layer and the Cu-Sn-Zn alloy plating layer. Therefore, their torque-on-shoulder resistances were more than 100%.

Comparing test number 2 and test number 3, when the alloy plating layers of the pin surface and the box surface are exchanged with each other, resultant torque-on-shoulder resistances remained high. Therefore, it is conjectured that exchanging the kinds of the alloy plating layers has no great influence on their effect.

The threaded connections for pipe of test number 4 and test number 5 included neither Zn-Ni alloy plating layer nor Cu-Sn-Zn alloy plating layer on both of their pin surfaces and box surfaces. Therefore, resultant torque-on-shoulder resistances were as low as 100% or less.

The threaded connection for pipe of test number 6 included the Cu-Sn-Zn alloy plating layer on its box surface but included no plating layer on its pin surface. Therefore, a resultant torque-on-shoulder resistance was as low as 91%.

The threaded connection for pipe of test number 7 included the Zn-Ni alloy plating layer on its box surface but included no plating layer on its pin surface. Therefore, a resultant torque-on-shoulder resistance was as low as 88%.

The threaded connection for pipe of test number 8 included the Zn-Ni alloy plating layers on both of its pin surface and box surface but included no Cu-Sn-Zn alloy plating layer. Therefore, a resultant torque-on-shoulder resistance was as low as 90%.

As seen from the above, the embodiment according to the present invention has been described. However, the aforementioned embodiment is merely an example for practicing the present invention. Therefore, the present invention is not limited to the previously-mentioned embodiment, and the previously-mentioned embodiment can be modified and practiced as appropriate without departing from the scope of the present invention.

### REFERENCE SIGNS LIST

- 3: pin
- 4: box
- 31, 41: thread part
- 32, 42: metal seal part
- 33, 43: shoulder part
- 100: Zn-Ni alloy plating layer
- 110: Cu-Sn-Zn alloy plating layer
- 200: lubricating coating

## Claims

1. A threaded connection for pipe comprising:
a pin and a box each of which has a contact surface including a thread part, a metal seal part, and a shoulder part;
a Zn-Ni alloy plating layer on the contact surface of one of the pin and the box, the Zn-Ni alloy plating layer being made of a Zn-Ni alloy;
a Cu-Sn-Zn alloy plating layer on the contact surface of another of the pin and the box, the Cu-Sn-Zn alloy plating layer being made of a Cu-Sn-Zn alloy; and
a lubricating coating on at least one of the Zn-Ni alloy plating layer and the Cu-Sn-Zn alloy plating layer, the lubricating coating being in a liquid state or a semisolid state.

2. The threaded connection for pipe according to claim 1, wherein
the Zn-Ni alloy plating layer has a thickness of 1 to 20 µm, the Cu-Sn-Zn alloy plating layer has a thickness of 1 to 20 µm, and the lubricating coating has a thickness of 30 to 300 µm.

3. The threaded connection for pipe according to claim 1 or 2, wherein
the Zn-Ni alloy consists of 85 to 91 mass % of Zn and 9 to 15 mass % of Ni, with the balance being impurities.

4. The threaded connection for pipe according to any one of claims 1 to 3, wherein
the Cu-Sn-Zn alloy consists of 40 to 70 mass % of Cu, 20 to 50 mass % of Sn and 2 to 20 mass % of Zn, with the balance being impurities.

5. A method for producing a threaded connection for pipe comprising a pin and a box each of which has a contact surface including a thread part, a metal seal part, and a shoulder part, the method comprising:
a step of forming a Zn-Ni alloy plating layer on the contact surface of one of the pin and the box, the Zn-Ni alloy plating layer being made of a Zn-Ni alloy;
a step of forming a Cu-Sn-Zn alloy plating layer on the contact surface of another of the pin and the box, the Cu-Sn-Zn alloy plating layer being made of a Cu-Sn-Zn alloy; and
a step of forming a lubricating coating on at least one of the Zn-Ni alloy plating layer and the Cu-Sn-Zn alloy plating layer, the lubricating coating being in a liquid state or a semisolid state.
